# EUROPÄISCHE PATENTSCHRIFT

(11) **EP 1 775 806 B1**
(45) Veröffentlichungstag und Bekanntmachung des Hinweises auf die Patenterteilung: **13.03.2013**
(21) Anmeldenummer: 05022173.8
(22) Anmeldetag: 11.10.2005
(51) Int. Cl.: H01S 3/23, H01S 3/00

(54) **Verfahren zur Erzeugung zeitlich rechteckiger Ultrakurzpulse**
Method for the production of temporal rectangular ultra-short pulses
Procedé pour la production d'impulsions temporelles rectangulaires ultracourtes

(43) Veröffentlichungstag der Anmeldung: 18.04.2007
(73) Patentinhaber: TRUMPF Laser GmbH + Co. KG, 78713 Schramberg (DE)
(72) Erfinder: Sutter Dirk, 78628 Rottweil (DE)
(74) Vertreter: Rank, Christoph

(56) Entgegenhaltungen:
- DE-A1- 10 063 976
- DE-A1- 10 304 401
- YANG J ET AL: "Low-emittance electron-beam generation with laser pulse shaping in photocathode radio-frequency gun" JOURNAL OF APPLIED PHYSICS, AMERICAN INSTITUTE OF PHYSICS. NEW YORK, US, Bd. 92, Nr. 3, 1. August 2002 (2002-08-01), Seiten 1608-1612, XP012057007 ISSN: 0021-8979
- HOENNINGER C ET AL: "DIODE-PUMPED THIN-DISK YB:YAG REGENERATIVE AMPLIFIER" APPLIED PHYSICS B: LASERS AND OPTICS, SPRINGER INTERNATIONAL, BERLIN, DE, Bd. B65, Nr. 3, September 1997 (1997-09), Seiten 423-426, XP000699349 ISSN: 0946-2171
- SQUIER J ET AL: "AN ALEXANDRITE PUMPED ND:GLASS REGENERATIVE AMPLIFIER FOR CHIRPED PULSE AMPLIFICATION" OPTICS COMMUNICATIONS, NORTH-HOLLAND PUBLISHING CO. AMSTERDAM, NL, Bd. 92, Nr. 1 / 2 / 3, 15. August 1992 (1992-08-15), Seiten 73-78, XP000292114 ISSN: 0030-4018
- WEINER A M ET AL: "HIGH-RESOLUTION FEMTOSECOND PULSE SHAPING" JOURNAL OF THE OPTICAL SOCIETY OF AMERICA - B, OPTICAL SOCIETY OF AMERICA, WASHINGTON, US, Bd. 5, Nr. 8, 1. August 1988 (1988-08-01), Seiten 1563-1572, XP000024178 ISSN: 0740-3224
- SUTTER R D H ET AL: "Towards industrial micro-machining with ultrashort laser pulses", LASERS AND ELECTRO-OPTICS EUROPE, 2005. CLEO/EUROPE. 2005 CONFERENCE O N MUNICH, GERMANY 12-17 JUNE 2005, PISCATAWAY, NJ, USA,IEEE, 12 June 2005 (2005-06-12), pages 355-355, XP010879990, DOI: 10.1109/CLEOE.2005.1568136 ISBN: 978-0-7803-8974-8
- MUELLER D ET AL: "Ultrashort pulse thin disk lasers and amplifiers" In: Dausinger F et al: "FEMTOSECOND TECHNOLOGY FOR TECHNICAL AND MEDICAL APPLICATIONS", 1 January 2004 (2004-01-01), SPRINGER, Berlin, XP009157066, ISBN: 0-540-20114-9 page 55-72, * Sections 4.1-4.2 *
- AGRAWAL G P: 'Nonlinear Fiber Optics; third edition', 2001, ACADEMIC PRESS, ISBN 0120451433 Seiten 97 - 134
- E. T. J. NIBBERING ET AL: 'Spectral determination of the amplitude and the phase of intense ultrashort optical pulses' JOURNAL OF THE OPTICAL SOCIETY OF AMERICA B Bd. 13, Nr. 2, 01 Februar 1996, Seite 317, XP055021508 ISSN: 0740-3224

## Beschreibung

Die Erfindung betrifft ein Verfahren zum Erzeugen von zeitlich im Wesentlichen rechteckigen Ultrakurzpulsen mit Pulsdauer von weniger als 10 ps.

Die Materialbearbeitung mit ultrakurzen Laserpulsen ermöglicht eine hohe Bearbeitungspräzision, da die thermische Beeinflussung des Werkstücks minimiert wird. Derzeit kommerziell verfügbare Ultrakurzpulslaser mit Pulsenergien oberhalb von 100 µJ beruhen in der Regel auf der regenerativen Verstärkung energieärmerer modengekoppelter Pulse eines Ultrakurzpulsoszillators. Die Pulse werden im Oszillator durch schnelle Modulation im Takt der Umlaufzeit geformt, z.B. unter Verwendung von passiven, sättigbaren Absorbern. Einzelne dieser hoch repetierenden Pulse werden anschließend selektiert und als so genannte "Seed"-Pulse in einen Laserverstärker eingekoppelt, wo sie regenerativ, d.h. unter Beibehaltung bestmöglicher Fokussierbarkeit, während vieler Resonatorumläufe verstärkt werden. Da bei der erwünschten Pulsdauer die angestrebte Energie meist einer so hohen Intensität entspricht, dass zumindest gegen Ende der Verstärkung unerwünschte nichtlineare optische Effekte wie Selbstfokussierung oder Selbstphasenmodulation die Strahlqualität der Pulse verschlechtern würden, werden die Oszillator-Verstärker-Systeme nach dem Prinzip der so genannten "Chirped Pulse Amplification" (CPA) betrieben: Der zu verstärkende Puls wird zunächst unter Ausnutzung seines breiten Frequenzspektrums zeitlich gedehnt, dann im Verstärker bei langer Pulsdauer auf moderate Intensitäten verstärkt, bevor er in einem dem Verstärker folgenden Kompressor zeitlich wieder zu kurzen Pulsdauern und damit höchsten Spitzenleistungen komprimiert wird. Das zeitliche Dehnen kann in einem externen "Stretcher" geschehen, bevor der Puls in den Verstärker eintritt, oder aber innerhalb des Verstärkers während vieler Umläufe bei zunächst noch niedriger Energie. Nachteile solcher Systeme sind die aufwändige Justage des benötigten Kompressors sowie die Komplexität und die Kosten des CPA-Verfahrens.

Demgegenüber bieten sich deutliche Vorteile durch Ausnutzung des Scheibenlaserkonzeptes innerhalb des regenerativen Verstärkers: Die Laserleistung verteilt sich beim Scheibenlaser wegen des einige Millimeter großen Strahldurchmessers im Verstärkermedium auf eine größere Querschnittsfläche, als dies z.B. bei Stab- und Faserverstärkern der Fall wäre. Durch die entsprechend geringeren Intensitäten lassen sich Pulsenergien von einigen mJ bei Putsdauern deutlich unter 25 ps auch ohne CPA erzeugen. Die bislang eingesetzten Ultrakurzpuls-Scheibenlaser wurden auf möglichst kurze Pulsdauern hin optimiert. Entsprechend wurde bei Ihrer Auslegung großer Wert darauf gelegt, einerseits spektral breitbandige Verstärkungsmedien zu verwenden und andererseits die nichtlinearen Effekte innerhalb des Verstärkers zu begrenzen. Speziell wurde beachtet, dass das die Nichtlinearität des Verstärkers beschreibende B-Integral deutlich kleiner als π blieb. Die in solchen Ultrakurzpuls-Scheibeniasern erzeugten Laserpulse haben einen zeitlichen und spektralen Verlauf, der einer Glockenkurve ähnelt und daher als gaußförmig bezeichnet werden kann. Auch andere typische Funktionen, wie z.B. der Sekanshyperbolikus, können in diesem Sinne als gaußförmig bezeichnet werden.

Aus DE 103 04 401 A1 ist ein Ultrakurzpulslaser zum Erzeugen von Ultrakurzpulsen bekannt, umfassend einen modengekoppelten Ultrakurzpulsoszillator ("Seed-Laser") und einen nachgeordneten regenerativen Laserverstärker mit zwei transmittiven optischen Elementen, nämlich einem laseraktiven Medium und einer Pockelszelle. Da die einzelnen Elemente des Laserverstärkers, insbesondere die Pockelszelle, eine positive Dispersion hinsichtlich der Gruppengeschwindigkeit aufweisen, erfolgt bei jedem Durchlauf des Verstärker-Laserpulses durch den Laserverstärker eine teilweise Kompensation der negativen Dispersion des Dispersionselements und somit auch eine teilweise Kompression des mit der Pulsdauervergrößerung des Dispersionselements behafteten Verstärker-Laserpulses, die insgesamt bis zum endgültigen Auskoppeln des Verstärker-Laserpulses als Auskoppellaserpuls andauert. Somit besteht die Möglichkeit, die negative Dispersion des Dispersionselements so groß zu wählen, dass die durch diese bedingte Pulsdauervergrößerung sich genau mit der durch die positive Dispersion der Elemente des Resonators bedingten Pulsdauervergrößerung aufhebt, um so Dispersionseffekte zu vermeiden.

Es ist demgegenüber die Aufgabe der vorliegenden Erfindung, ein alternatives Verfahren zum Erzeugen von zeitlich im Wesentlichen rechteckigen Ultrakurzpulsen anzugeben, um technische Materialien wie Dielektrika (z.B. Kunststoffe, Gläser, Kristalle oder Keramiken) oder Metalle möglichst effizient zu bearbeiten.

Diese Aufgabe wird erfindungsgemäß gelöst durch ein Verfahren zum Erzeugen von zeitlich im Wesentlichen rechteckigen Ultrakurzpulsen, die eine Pulsdauer von weniger als 10 ps aufweisen und deren steigende und/oder fallende Flanke bis zum Erreichen der im Wesentlichen über das Intensitätsplateau konstanten Intensität maximal halb, insbesondere maximal ein Viertel, so lange dauert wie die Dauer des Plateaus, mit einem Ultrakurzpulslaser, der einen modengekoppelten Ultrakurzpulsoszillator und zum Erzeugen der Ultrakurzpulse einen nachgeordneten regenerativen Laserverstärker mit einem transmittiven laseraktiven Medium und einem weiteren transmittiven optischen Element umfasst, wobei Laserpulse mit einem mindestens 0,5 nm breiten Wellenlängenspektrum in dem laseraktiven Medium verstärkt werden und vor Einsetzen von nichtlinearen Effekten einen positiven Chirp aufweisen, und wobei die Wirkung von linearer und nichtlinearer Dispersion des laseraktiven Mediums und des weiteren transmittiven optischen Elements derart abgestimmt wird, dass die Pulsenergie der verstärkten Laserpulse innerhalb des Laserverstärkers aufgrund von nichtlinearen Effekten zu einer spektralen Verbreiterung der Laserpulse auf mindestens das Doppelte führt und die spektrale Leistungsdichte der verstärkten Laserpulse in der Mitte des Pulsspektrums abnimmt.und sich zu den Rändern des Pulsspektrums hin verändert, so dass sich die spektrale Leistungsdichte der verstärkten Laserpulse im Wesentlichen auf zwei Spitzen an den Rändern des Pulsspektrums verschiebt.

Der Quotient der Dauer des Plateaus einerseits und von steigender und fallender Flanke addiert andererseits sollte bei einem erfindungsgemäßen Rechteckpuls also minimal 1 betragen. Die Laserpulse mit einem nahezu rechteckigen zeitlichen Profil eignen sich für die Materialbearbeitung, insbesondere für die Materialabtragung, besser als gaußförmige Pulse, weil ein wesentlich größerer Anteil der Pulsenergie oberhalb der (nichtlinearen) Abtragsschwelle des zu bearbeitenden Materials liegt. Ein gaußförmiger Puls muss für denselben Materialabtrag eine höhere Energie aufweisen und führt durch die längeren zeitlichen Pulsausläufer, die unter der Bearbeitungsschwelle liegen, zu vermehrter Schmelzbildung bei der Bearbeitung.

Bevorzugt führt die Pulsenergie der verstärkten Laserpulse über nichtlineare Effekte im Laserverstärker mindestens zu einer Vervierfachung der spektralen Pulsbreite im Vergleich zum Spektrum der Seed-Pulse. Durch die kombinierte Wirkung von linearer Dispersion und nichtlinearen Brechungsindex gleichen Vorzeichens wird in dieser Weise erreicht, dass die Pulse innerhalb des Verstärkers einen rechteckigen zeitlichen Verlauf annehmen und dass insbesondere die Ausgangspulse des Laserverstärkers einen rechteckigen zeitlichen Verlauf aufweisen, ohne dass nach dem Laserverstärker ein weiteres optisches Element zur Pulsformung notwendig ist. Die nichtlineare Dispersion der Laserpulse wird durch die Energie und Dauer der verstärkten Pulse sowie durch zurückgelegte Weglänge und Strahldurchmesser in dem oder den dominanten nichtlinearen transmittiven Elementen des Verstärkers bestimmt. Physikalische Grundlagen und Beispiele zur nichtlinearen Pulsformung sind im Lehrbuch "Nonlinear Fiber Optics" von Govind P. Agrawal (Academic Press; 3rd edition; London, San Diego; 2001; ISBN: 0120451433), insbesondere im Kapitel 4.2, beschrieben.

Die lineare Dispersionslänge im Laserverstärker ist vorzugsweise so gewählt, dass die Laserpulse vor dem Einsetzen von nichtlinearen Effekten im Verstärker mindestens leicht positiv "gechirpt", insbesondere bis zur 1,2-fachen transformlimitierten Pulsdauer linear dispersiv gedehnt werden. Unter einem transformlimitierten Puls ist dabei ein Puls zu verstehen, bei dem alle Spektralkomponenten dieselbe spektrale Phase aufweisen und sich dadurch simultan überlagern, wodurch die über die Varianz definierte Pulsdauer minimiert wird. Durch die bei der weiteren Verstärkung einsetzenden nichtlinearen Effekte in den optischen Elementen des Verstärkers, insbesondere durch die Selbstphasenmodulation, die der Puls bei ausreichender Intensität innerhalb des Verstärkers erfährt, wird das Pulsspektrum anschließend auf mindestens das Doppelte verbreitert, wobei die spektrale Leistungsdichte bei der Zentralwellenlänge abnimmt und sich im Wesentlichen auf zwei Spitzen an den Rändern des Pulsspektrums verschiebt. Diese Spitzen an den Rändern des Spektrums werden durch die lineare Dispersion zeitlich relativ zu den zentralen Spektralkomponenten nach vorne bzw. nach hinten verschoben, wodurch insgesamt die erwünschte zeitlich rechteckige Form der Laserpulse erreicht wird.

Dazu erreicht die Verstärkungswirkung des laseraktiven Mediums auf die Laserpulse im Laserverstärker vorzugsweise mit zunehmender Zahl ihrer Umläufe und/oder mit zunehmender Weglänge eine Sättigung. In einer Ausführung der Erfindung ist die Netto-Verstärkungswirkung des laseraktiven Mediums im Laserverstärker, die aus der Differenz von Verstärkung und Verlusten resultiert, wellenlängenabhängig und in der Mitte des Pulsspektrums höher als an dessen Rändern. Dadurch nimmt die Verstärkung eines Laserpulses aufgrund seiner nichtlinearen spektralen Verbreiterung mit zunehmender Weglänge im Verstärkermedium oder mit steigender Zahl der Umläufe durch das Verstärkermedium ab. Auf diese Weise wird eine zu starke Verbreiterung des Pulsspektrums vermieden, die zu einer Störung der zeitlich rechteckigen Pulsform der Ausgangspulse führen würde.

Vorzugsweise beträgt die volle Halbwertsbreite der spektralen Leistungsdichteverteilung der Laserpulse vor dem Eintritt in den Laserverstärker mehr als 150 GHz, so dass die Ausgangspulse des erfindungsgemäßen Laserverstärkers steile Flanken von kurzer Dauer aufweisen.

In einer besonders bevorzugten Ausführungsform erzeugt der Ultrakurzpulslaser Ausgangspulse mit einer Zentralwellenlänge zwischen 600 und 1300 nm, die eine Pulsdauer von mehr als 0,4 ps und eine Pulsenergie von mindestens 10 µJ aufweisen und sich somit gut zur präzisen Bearbeitung technischer Materialien eignen. Bei solchen Zentralwellenlängen entspricht die bevorzugte spektrale Breite von mindestens 150 GHz einer vollen Halbwertsbreite von mindestens 0,5 nm.

In einer weiteren Ausführungsform des erfindungsgemäßen Verfahrens werden die Ausgangspulse des Laserverstärkers anschließend mittels eines Frequenzkonversionselements durch nichtlineare Effekte wie insbesondere durch einen Frequenzverdoppler oder parameterische Verstärkung zu anderen Wellenlängen verschoben. So kann beispielsweise bei hohen Spitzenintensitäten ein sehr kurzer Verdopplungskristall mit einem entsprechend sehr breiten spektralen Akzeptanzbereich eingesetzt werden, um die Frequenz der Laserpulse von 1030 nm auf 515 nm zu verdoppeln. Bei einer solchen Frequenzverdopplung wird die rechteckige Pulsform im Wesentlichen erhalten, schwache Vor- und Nachpulse sogar unterdrückt, wobei allerdings die Fluktuation der Spitzenleistung erhöht wird.

Der regenerative Laserverstärker weist vorzugsweise einen Scheibenlaserkristall als laseraktivern Medium auf, das insbesondere aus Yb:YAG besteht. Dies bietet den Vorteil so großer Strahldurchmesser im Verstärker, dass besonders hohe Pulsenerglen ohne CPA bei dennoch begrenzter Nichtlinearität erreicht werden können und der Ultrakurzpulslaser insgesamt einfacher aufgebaut werden kann. Aufgrund der geringen Dicke des Scheibenlaserkristalls werden die nichtlinearen Effekte in einem solchen Laserverstärker in der Regel vor allem durch das Schaltelement bestimmt, durch das die Laserpulse in den Verstärker ein- und ausgekoppelt werden. Die Länge dieses dominanten nichtlinearen Elements im Laserverstärker und die Verstärkung pro Umlauf eines Laserpulses im Verstärker werden vorzugsweise so gewählt, dass das die Nichtlinearität des Verstärkers beschreibende B-Integral pro Umlauf des Laserpulses deutlich kleiner ist als π, während das über die Summe der Pulsumläufe akkumulierte B-Integral größer ist als π. So wird der Einfluss der nichtlinearen Effekte, wie z.B. der Selbstfokussierung, pro Pulsumlauf begrenzt, was sich positiv auf die Strahlqualität der Ausgangspulse auswirkt.

Besonders bevorzugt wird ein das laseraktive Medium des Laserverstärkers bildender Scheibenlaserkristall pro Umlauf der Laserpulse im Laserverstärker häufiger durchlaufen als das weitere transmittive Element, um trotz eines zwecks optimaler Kühlung sehr flachen Scheibenkristalls eine ausreichende Verstärkungseffizienz zu erreichen.

Besonders bevorzugt werden zur Mikrostrukturierung von Materialien die Ultrakurzpulse als Einzelpulse oder als Pulsfolgen verwendet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: den prinzipiellen Aufbau des erfindungsgemäßen Ultrakurzpulslasers;
- Fig. 2: die Netto-Verstärkung pro Umlauf eines Laserpulses in einem Yb:YAG-Scheibenlaser-Resonator;
- Fign. 3a bis 3c: exemplarisch die spektrale Leistungsdichte von mit dem erfindungsgemäßen Ultrakurzpulslaser erzeugten rechteckigen Ultrakurzpulsen;
- Fign. 4a bis 4c: den zeitlichen Leistungsverlauf der in Fign. 3a bis 3c gezeigten Ultrakurzpulse; und
- Fign. 5a bis 5d: vier unterschiedliche beispielhafte Pulsformen.

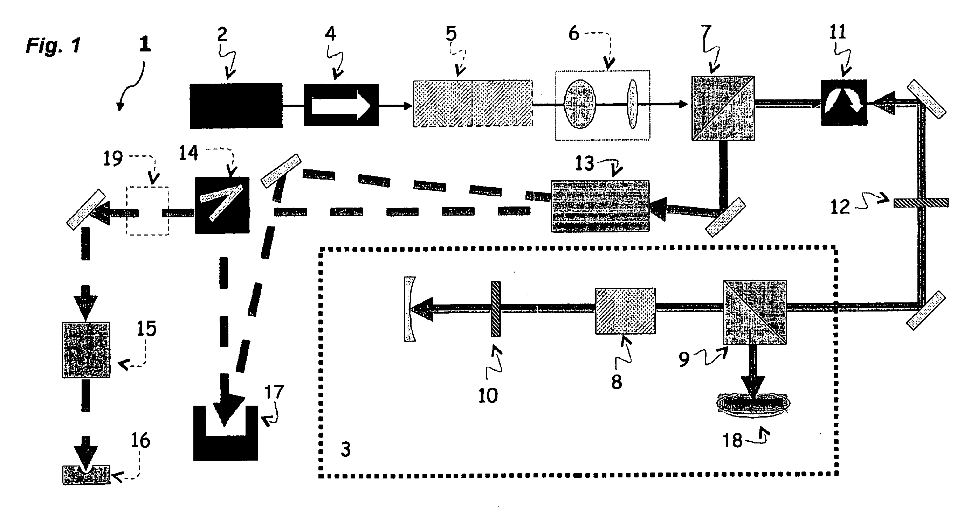

Der in **Fig. 1** gezeigte Ultrakurzpulslaser 1 umfasst einen modengekoppelten Ultrakurzpulsoszillator **2,** der Pulse mit einem mindestens 0,5 nm breiten Wellenlängenspektrum (entsprechend einer spektralen Frequenzbandbreite von mindestens 150 GHz) bei einer Zentralwellenlänge von ca. 1030 nm erzeugt, und einen Laserverstärker **3,** der im gezeigten Ausführungsbeispiel als regenerativer Scheibenlaser-Resonator mit Yb:YAG als laseraktivem Material ausgeführt ist. Die Pulse des modengekoppelten Oszillators 2 durchlaufen einen Faraday-Isolator **4,** der den Oszillator 2 als optische Diode vor Rückkopplungen schützt. Die Taktrate der Pulse wird gegebenenfalls durch ein Schaltelement **5,** das ein akusto-optischer Modulator oder ein elektro-optischer Modulator, z.B. eine Pockelszelle, sein kann, derart reduziert, dass nur ausgewählte zu verstärkende Pulse zum Laserverstärker 3 gelangen: Im Fall einer Pockelszelle als Schaltelement 5 wird die Polarisation eines ausgewählten Laserpulses durch Anlegen eines kurzen, synchronisierten Hochspannungspulses um 90° so gedreht, dass der Puls nach Durchlaufen eines Teleskops **6** zur Divergenzanpassung einen polarisierenden Strahlteiler **7** im Gegensatz zu nicht-selektierten Pulsen passiert und schließlich über ein Einkoppelelement aus Pockelszelle **8** und polarisierendem Strahlteiler **9,** ggfs. in Kombination mit einem Viertelwellenplättchen **10,** in den Verstärker 3 eingekoppelt wird. Die Polarisation der vom Laserverstärker 3 zurückkommenden, verstärkten Pulse wird durch einen Faraday-Rotator **11** in Kombination mit einem Halbwellenplättchen **12** derart gedreht, dass sie nun vom Strahlteiler 7 zum externen Modulator **13** abgelenkt werden. Über diesen Modulator 13 werden die verstärkten Pulse einzelpulsgenau und mit frei wählbarer Amplitude zum mechanischen Zentralverschluss **14** gelenkt und können anschließend mit Hilfe einer geeigneten Strahlführungs- und Bearbeitungsoptik **15** zur Materialbearbeitung eines Werkstücks **16** genutzt werden. Nicht erwünschte Pulse werden in einem Absorber **17** absorbiert. Die Ausgangspulse des Laserverstärkers 3 können außerdem durch ein dem Laserverstärker 3 folgendes nichtlineares Frequenzkonversionselement **19** frequenzkonvertiert werden.

Die in den Laserverstärker 3 eintretenden Pulse können eine bandbreite-limitierte Pulsdauer aufweisen, können aber auch positiv oder negativ "gechirpt" sein, so dass die längerwellige Spektralkomponenten den kürzerwelligen voraus laufen oder umgekehrt. Die Dauer der in den Laserverstärker 3 eintretenden Pulse ist insgesamt zweitrangig: Erfindungsgemäße, kastenförmige Pulse können mit auf über 2 ps positiv "gechirpten" Eingangspulsen erreicht werden, wohingegen transformlimitierte Eingangspulse mit einer Dauer von 2 ps langsamere Flankenanstiege bewirken und daher nachteilig sind. Wenn die breitbandigen Eingangspulse transformlimitiert oder negativ "gechirpt" sind, dann muss ihre Energie so gering sein, dass im Laserverstärker 3 vor Einsetzen der nichtlinearen Effekte zumindest ein leichter positiver "Chirp" durch die positive lineare Dispersion des Laserverstärker 3 erreicht wird.

Im Laserverstärker 3 werden die Laserpulse durch Umläufe über ein hier als Scheibenlaserkristall ausgeführtes laseraktives Medium **18** verstärkt. Zugleich wirkt die im Mittel positive lineare Dispersion im Laserverstärker 3 derart pulsverlängernd, dass die Pulse noch vor Einsetzen der nichtlinearen Effekte im Laserverstärker 3 einen positiven "Chirp" und eine Pulsdauer von mehr als einer Pikosekunde aufweisen, in idealer Weise ca. 1 bis 5 ps. Durch die bei der weiteren Verstärkung einsetzenden nichtlinearen Effekte, insbesondere durch die Selbstphasenmodulation, die die Pulse bei ausreichender Intensität innerhalb des Laserverstärker 3 erfahren, wird das Pulsspektrum auf mindestens 10 nm verbreitert, wobei die spektrale Leistungsdichte bei der Zentralwellenlänge abnimmt und sich im Wesentlichen auf zwei Spitzen an den Rändern des Pulsspektrums verschiebt. Die Selbstphasenmodulation tritt in allen transmittiven Elementen des Laserverstärkers 3 auf, so z.B. in der Pockelszelle 8, ggfs. in einer verstärkerinternen Linse oder auch im Scheibenlaserkristall 18, wobei deren Einfluss jeweils von ihren Nichtlinearitäts-Parametern und ihrer Dicke bestimmt wird. Fig. 1 zeigt das einfachste Beispiel eines Scheibenlaser-Resonators, in dem der rückseitig verspiegelte Scheibenlaserkristall 18 als Endspiegel wirkt. In der Praxis wird der Scheibenlaserkristall 18 üblicherweise als Faltungsspiegel eingesetzt.

Bei einer Ausführung des Ultrakurzpulslasers 1 mit einem Yb:YAG-Scheibenlaserkristall 18 von rund 0,1 mm Dicke und einer Pockelszelle 8 aus Beta-Barium-Borat (BBO) mit einer Länge von rund 20 mm wird die Selbstphasenmodulation vor allem durch die Weglänge der Laserpulse in der Pockelszelle 8 bestimmt, sofern der Strahldurchmesser dort nicht wesentlich größer als auf dem Scheibenlaserkristall 18 ist und keine anderen Elemente zur Erzeugung nichtlinearer Effekte beitragen. Zugleich wird die Laserpulsenergie, ab der die Selbstphasenmodulation einsetzt, auch durch die Strahlquerschnittsfläche im Laserverstärker 3 bestimmt. Beispielsweise tritt bei einem Ultrakurzpulslaser 1 mit einer Pockelszelle 8 aus Beta-Barium-Borat (BBO) mit einer Länge von ca. 20 mm bei einem Strahldurchmesser von 2 mm, sofern diese Pockelszelle 8 das dominante nichtlineare Element darstellt, ca. ab einer Leistung von 10 MW eine spektrale Verbreiterung durch Selbstphasenmodulation ein, welche die spektrale Einengung auf Grund der begrenzten Verstärkungsbandbreite derart überkompensiert, dass sich das Spektrum bei den folgenden Verstärkerumläufen immer stärker verbreitert.

Aufgrund der hohen Sättigungsflussdichte von Yb:YAG wird die erwünschte Sättigung der Verstärkung über die spektrale Breite anstatt über die energiebedingte Sättigung erreicht, sofern der Strahldurchmesser im dominanten nichtlinearen Element begrenzt ist. Für Ytterbium-dotierte Materialien mit breiterer Verstärkungsbandbreite (z.B. Yb-Wolframate, Yb-Glas, Yb-Sesquioxide, etc.) ist die Sättigungsintensität aufgrund des geringeren Verstärkungsquerschnitts ungefähr im gleichen Maße höher, wie die spektrale Breite wächst. Aufgrund der größeren spektralen Breite eignen sich solche Materialien für kürzere Rechteckpulse mit entsprechend noch breiteren Pulsspektren, sofern die Nettoverstärkungsbandbreite nicht durch zu hohe Verluste innerhalb des Laserverstärkers 3 begrenzt wird. In diesem Fall können vorzugsweise entsprechend breitbandigere Eingangspulsspektren verwendet werden.

Um eine erfindungsgemäße Pulsformung bereits bei niedrigeren Pulsenergien zu erreichen, als sie mit einem Scheibenlaserkristall möglich sind, z.B. bei Pulsenergien unterhalb von 100 µJ, können zusätzliche optische Komponenten mit starkem nichtlinearen Einfluss im Strahlengang des Laserverstärkers 3 eingesetzt werden. Ebenso kann der Strahldurchmesser verringert werden, z.B. auf deutlich kleiner als 1 mm, um dadurch die Pulsintensität zu steigern und so die für die erwünschte rechteckige Pulsform notwendige Nichtlinearität zu erreichen. So kann z.B. eine Glasplatte an einer Position in den Strahlengang aufgenommen werden, an der der Strahldurchmesser (ggfs. durch zusätzliche, den Strahl fokussierende Komponenten) gegenüber dem Strahldurchmesser bei der Pockelszelle 8 reduziert ist. Auch der Strahldurchmesser bei der Pockelszelle 8 kann z. B. durch ein resonatorinternes Teleskop auf unter 1 mm reduziert werden, so dass es in der Pockelszelle bei entsprechend niedrigeren Pulsenergien zu deutlicher Selbstphasenmodulation kommt. Insbesondere können auch faseroptische Elemente im Laserverstärker 3 eingesetzt werden, in denen bei niedrigeren Energien deutliche Selbstphasenmodulation auftritt.

Die Erfindung beschränkt sich nicht auf den hier beschriebenen Fall einer positiven linearen und nichtlinearen Dispersion im Laserverstärker. Prinzipiell kann eine negative lineare Dispersion im Laserverstärker gemeinsam mit einem dominanten transmittiven Element negativer Nichtlinearität völlig analog zur Formung rechteckiger Pulse eingesetzt werden.

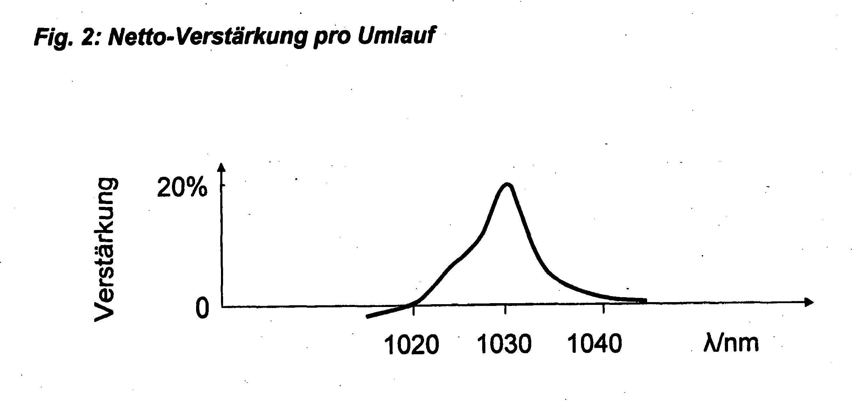

**Fig. 2** zeigt die Netto-Verstärkung pro Umlauf eines Laserpulses im Laserverstärker 3 mit einem Yb:YAG-Scheibenlaserkristall 18. Die Verstärkung ist wellenlängenselektiv in der Mitte des Pulsspektrums größer als an dessen Rändern.

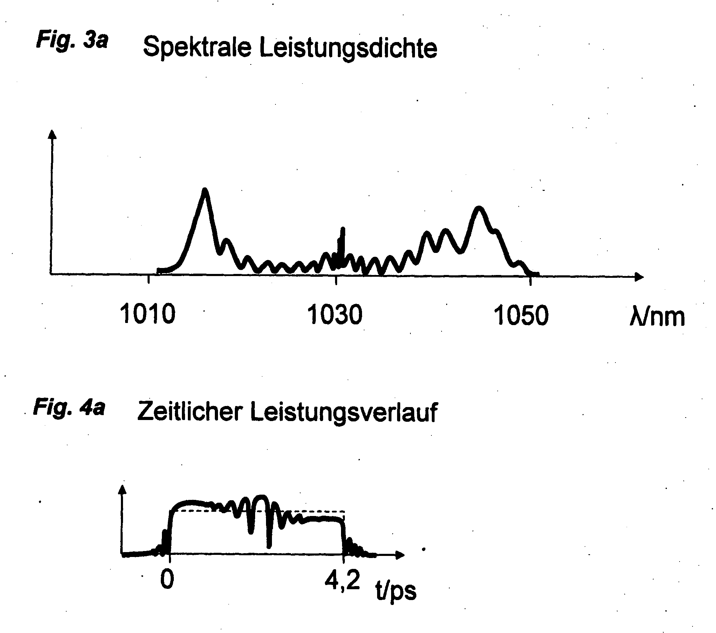

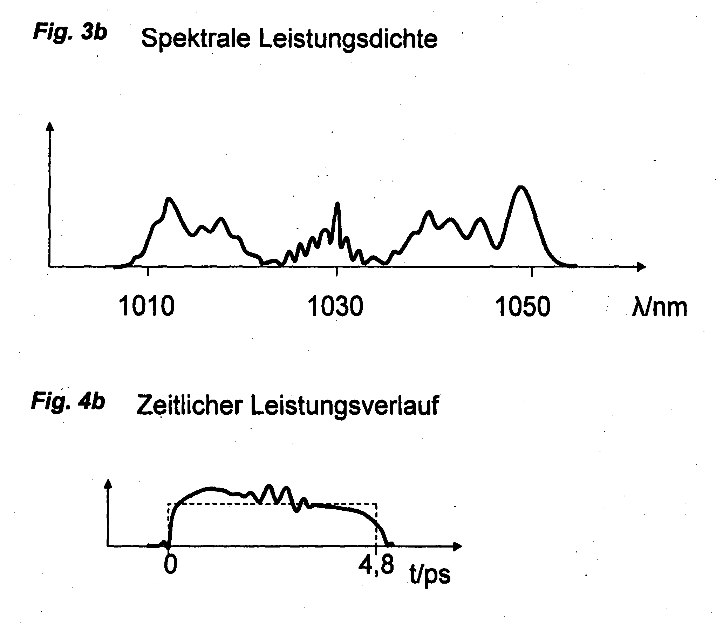

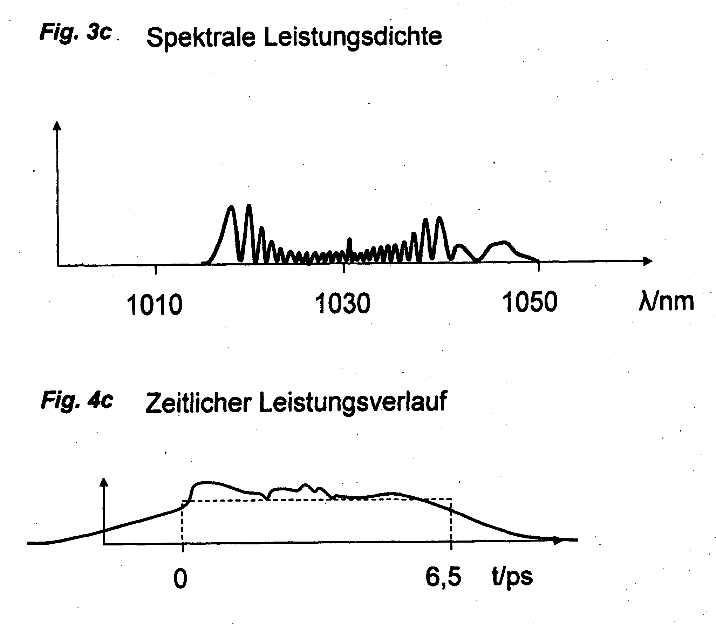

**Fign. 3a bis 3c** zeigen exemplarisch die spektrale Leistungsdichte jeweils eines in einem regenerativen Laserverstärker 3 mit einem Yb:YAG-Scheibenlaserkristall 18 bei 1 mm Strahldurchmesser mit einer 2 cm langen BBO-Pockelszelle erzeugten rechteckigen Pulses. In **Fig. 4a bis 4c** ist der zugehörige zeitliche Leistungsverlauf der Pulse dargestellt. In diesen Beispielen haben die Seed-Pulse jeweils eine Energie von 4 nJ und eine Zentralwellenlänge von 1030 nm. Bei Fig. 3a/4a ist der Seed-Puls 300 fs lang und transformlimitiert, bei Fig. 3b/4b ist der Seed-Puls auf 2 ps positiv "gechirpt", und bei Fig. 3c/4c ist der Seed-Puls 2 ps lang und transformlimitiert.

Bei einer Netto-Anfangsverstärkung von 20% und einem Doppeldurchgang durch die Pockelszelle 8 pro Umlauf des Pulses im Laserverstärker 3 wächst in diesen Fällen die Pulsspitzenleistung etwa ab dem 80sten Umlauf des Pulses im Laserverstärker 3 nicht mehr deutlich, und es bildet sich etwa ab dem 90sten Verstärkerumlauf eine näherungsweise rechteckige zeitliche Pulsform aus. Bei den auf 2 ps Pulsdauer positiv "gechirpten" Eingangspulsen mit ca. 4 nm breiten Spektren werden so bei einer Pulsenergie von ca. 1 mJ eine Pulsleistung von 200 bis 300 MW im Rechteck-Plateau mit einer von Plateau-Dauer von ca. 3-6 ps und Flanken von jeweils unter 1 ps erreicht. Das Pulsplateau der Pulse weist eine im Wesentlichen konstante Intensität auf. Im Pulsplateau der erfindungsgemäßen rechteckigen Pulse können durch Interferenzeffekte Leistungsfluktuationen auftreten. Der in Fig. 3c/4c gezeigte Puls stellt einen Grenzfall dafür dar, was gerade noch als erfindungsgemäßer rechteckiger Puls angesehen werden kann. Unter Pulsformen mit einer im Wesentlichen konstanten Intensität im Plateaubereich werden im Sinne der Erfindung auch solche Pulsformen verstanden, bei denen die Intensität am höheren der beiden oberen Trapezeckpunkte maximal doppelt so hoch ist wie am niedrigeren. Vorzugsweise sollten die Leistungsfluktuationen im Plateaubereich begrenzt sein. Insbesondere sollte die relative Abweichung (RMS-Wert, d.h. Wurzel aus der mittleren quadratischen Abweichung) der realen Pulsform vom idealen Trapez im Plateaubereich 15% bis 20% nicht überschreiten. Für die in Fig. 3 gezeigten Pulsformen liegt die RMS-Fluktuation im Plateaubereich beim Puls (a) ca. 12%, bei (b) bei ca. 9% und bei (c) bei ca. 6%.

Die Werte für die Pulsenergie und die Pulsbreite des Rechteckpulses lassen sich durch die Verstärkung, die für die ersten Umläufe typischerweise bei 10 bis 25% pro Umlauf liegt, sowie durch die "Seed"-Puls-Parameter und durch die Anzahl der Umläufe im Laserverstärker 3 beeinflussen.

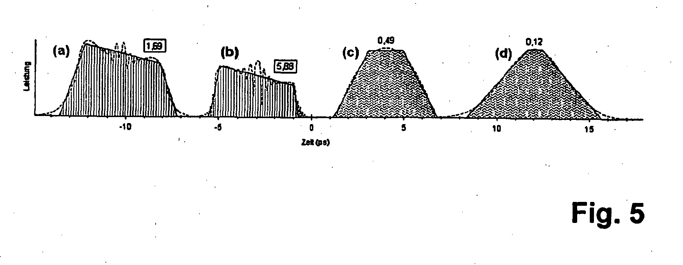

Unter "im Wesentlichen rechteckig" wird im erfindungsgemäßen Zusammenhang auch eine Pulsform eingeschlossen, die derart durch ein schiefes Trapez angenähert werden kann, wie dies in **Fig. 5** für vier unterschiedliche - gestrichelt gezeichnete - Pulse prinzipiell gezeigt ist, also durch eine über drei Zeitabschnitte jeweils linear variierende Leistung, wobei der erste und der dritte Zeitbereich die steigende bzw. fallende Flanke darstellen und der mittlere das Plateau. Bei im Wesentlichen rechteckigen Pulsen ist die Plateaudauer mindestens doppelt so lang wie die steigende und/oder fallende Flanke und zugleich beträgt die Steigung im Plateaubereich maximal ein Fünftel der Steigung der steileren Flanke.

Der in Fig. 5a gezeigte Puls wird im beschriebenen Laserverstärker 3 mit einer 2 cm langen Pockelszelle 8 mit einem Strahldurchmesser von 2 mm bei transformlimitierten Eingangspulsen mit einer Dauer von 1 ps gebildet, der in Fig. 5b gezeigte Puls bei transformlimitierten Eingangspulsen mit einer Dauer von 300 fs, entspricht also dem in Fig. 3a gezeigten Beispiel. Der in Fig. 5c gezeigte Puls hat die Form einer Parabel und der in Fig. 5d gezeigte Puls die Form einer Gauß-Kurve. Eine Anpassung der Pulsformen nach der Methode der kleinsten Fehlerquadrate durch schiefe Trapeze (durchgezogene Linien) mit drei Zeitbereichen ergibt, dass das Pulsplateau in den beiden ersten Fällen länger andauert als beide Flanken zusammen, genauer 1,69mal bzw. sogar 5,88mal so lange. Beim parabelförmigen Puls der Fig. 5c dauern die Flanken dagegen jeweils länger als das Plateau. Beim gaußförmigen Puls der Fig. 5d beträgt die Dauer des Plateaus nur 12% der summierten Flankendauer. Die in Fign. 5a und 5b gezeigte Pulse gelten im Sinne der Erfindung als "kastenförmig" oder "rechteckig", die beiden anderen nicht. Die Flanken sind im ersten Fall ca. 12mal, im zweiten Fall mehr als 20mal so steil wie das damit vergleichsweise ebene Plateau.

## Patentansprüche

1. Verfahren zum Erzeugen von zeitlich im Wesentlichen rechteckigen Ultrakurzpulsen, die eine Pulsdauer von weniger als 10 ps aufweisen und deren steigende und/oder fallende Flanke bis zum Erreichen der im Wesentlichen über das Intensitätsplateau konstanten Intensität maximal halb, insbesondere maximal ein Viertel, so lange dauert wie die Dauer des Plateaus, mit einem Ultrakurzpulslaser (1), der einen modengekoppelten Ultrakurzpulsoszillator (2) und zum Erzeugen der Ultrakurzpulse einen nachgeordneten regenerativen Laserverstärker (3) mit einem transmittiven laseraktiven Medium (18) und einem weiteren transmittiven optischen Element (8) umfasst,
wobei Laserpulse mit einem mindestens 0,5 nm breiten Wellenlängenspektrum in dem laseraktiven Medium (18) verstärkt werden und vor Einsetzen von nichtlinearen Effekten einen positiven Chirp aufweisen, und wobei die Wirkung von linearer und nichtlinearer Dispersion des laseraktiven Mediums (18) und des weiteren transmittiven optischen Elements (8) derart abgestimmt wird, dass die Pulsenergie der verstärkten Laserpulse innerhalb des Laserverstärkers (3) aufgrund von nichtlinearen Effekten zu einer spektralen Verbreiterung der Laserpulse auf mindestens das Doppelte führt und die spektrale Leistungsdichte der verstärkten Laserpulse in der Mitte des Pulsspektrums abnimmt und sich zu den Rändern des Pulsspektrums hin verändert, so dass es sich im Wesentlichen auf zwei Spitzen an den Rändern des Pulsspektrums verschiebt

2. Verfahren nach Anspruch 1, **dadurch gekennzeichnet, dass** die Verstärkungswirkung des laseraktiven Mediums (18) auf die Laserpulse im Laserverstärker (3) mit zunehmender Zahl ihrer Umläufe und/oder mit zunehmender Weglänge eine Sättigung erreicht.

3. Verfahren nach Anspruch 1 oder 2, **dadurch gekennzeichnet, dass** die Netto-Verstärkungswirkung des laseraktiven Mediums (18) wellenlängenabhängig und in der Mitte des Pulsspektrums höher als an dessen Rändern ist.

4. Verfahren nach einem der vorhergehenden Ansprüche, **dadurch gekennzeichnet, dass** die Laserpulse im Laserverstärker (3) vor Einsetzen von nichtlinearen Effekten mindestens bis zur doppelten transformlimitierten Pulsdauer linear dispersiv gedehnt werden.

5. Verfahren nach einem der vorhergehenden Ansprüche, **dadurch gekennzeichnet, dass** die Halbwertsbreite der spektralen Leistungsdichteverteilung der Laserpulse vor dem Eintritt in den Laserverstärker (3) mindestens 150 GHz beträgt.

6. Verfahren nach einem der vorhergehenden Ansprüche, **dadurch gekennzeichnet, dass** die Ausgangspulse des Laserverstärkers (3) eine Pulsdauer von mehr als 0,5 ps und eine Pulsenergie von mindestens 10 µJ aufweisen.

7. Verfahren nach einem der vorhergehenden Ansprüche, **dadurch gekennzeichnet, dass** die Zentralwellenlänge der Ausgangspulse des Laserverstärkers (3) zwischen 600 und 1300 nm liegt.

8. Verfahren nach einem der vorhergehenden Ansprüche, **dadurch gekennzeichnet, dass** die Ausgangspulse des Laserverstärkers (3) durch ein dem Laserverstärker (3) nachgeordnetes nichtlineares - Frequenzkonversionselement (19) frequenzkonverüert werden.

9. Verfahren nach einem der vorhergehenden Ansprüche, **dadurch gekennzeichnet, dass** die Länge des weiteren transmittiven optischen Elements (8) im Laserverstärker (3) und die Verstärkung pro Umlauf eines Laserpulses im Laserverstärker (3) derart gewählt werden, dass das B-Integral pro Umlauf des Laserpulses kleiner ist als π, während das über die Summe der Pulsumläufe akkumulierte B-Integral größer ist als π.

10. Verfahren nach einem der vorhergehenden Ansprüche, **dadurch gekennzeichnet, dass** ein das laseraktive Medium (18) des Laserverstärkers (3) bildender Scheibenlaserkristall pro Umlauf der Laserpulse im Laserverstärker (3) häufiger durchlaufen wird als das weitere transmittive optische Element (8).

11. Verfahren nach einem der vorhergehenden Ansprüche, **dadurch gekennzeichnet, dass** zur Mikrostrukturierung von Materialien die Ultrakurzpulse als Einzelpulse oder als Pulsfolgen verwendet werden.

## Claims

1. A method for producing temporal substantially rectangular ultrashort pulses, which have a pulse duration of less than 10 ps and the rising and/or falling edge of which until the intensity that is substantially constant over the intensity plateau is reached lasts at most half, in particular at most a quarter, as long as the duration of the plateau, with an ultrashort pulse laser (1) that comprises a mode-coupled ultrashort pulse oscillator (2) and, to generate the ultrashort pulses, a downstream regenerative laser amplifier (3) with a transmissive laser-active medium (18) and a further transmissive optical element (8), wherein laser pulses having a wavelength spectrum at least 0.5 nm wide are amplified in the laser-active medium (18) and before onset of non-linear effects have a positive chirp, and wherein the effect of linear and non-linear dispersion of the laser-active medium (18) and of the further transmissive optical element (8) is co-ordinated in such a manner that the pulse energy of the amplified laser pulses inside the laser amplifier (3) due to non-linear effects leads to a spectral broadening of the laser pulses to at least double and the power spectral density of the amplified laser pulses in the middle of the pulse spectrum decreases and changes towards the edges of the pulse spectrum, so that there is a shift substantially to two peaks at the edges of the pulse spectrum.

2. A method according to claim 1, **characterised in that** the amplification effect of the laser-active medium (18) on the laser pulses in the laser amplifier (3) reaches saturation with an increasing number of round trips of said pulses and/or with increasing path length.

3. A method according to claim 1 or 2, **characterised in that** the net amplification effect of the laser-active medium (18) is wavelength-dependent and is higher in the middle of the pulse spectrum than at the edges thereof.

4. A method according to any one of the preceding claims, **characterised in that** before onset of non-linear effects the laser pulses in the laser amplifier (3) are linearly dispersively stretched at least to double the transform-limited pulse duration.

5. A method according to any one of the preceding claims, **characterised in that** the full width at half maximum of the power spectral density distribution of the laser pulses before entry into the laser amplifier (3) is at least 150 GHz.

6. A method according to any one of the preceding claims, **characterised in that** the output pulses of the laser amplifier (3) have a pulse duration of more than 0.5 ps and a pulse energy of at least 10 µJ.

7. A method according to any one of the preceding claims, **characterised in that** the central wavelength of the output pulses of the laser amplifier (3) is between 600 and 1300 nm.

8. A method according to any one of the preceding claims, **characterised in that** the output pulses of the laser amplifier (3) are frequency converted by a nonlinear frequency conversion element (19) arranged downstream of the laser amplifier (3).

9. A method according to any one of the preceding claims, **characterised in that** the length of the further transmissive optical element (8) in the laser amplifier (3) and the amplification per round trip of a laser pulse in the laser amplifier (3) are selected such that the B-integral per round trip of the laser pulse is less than π, whilst the B-integral accumulated over the sum of the pulse round trips is greater than π.

10. A method according to any one of the preceding claims, **characterised in that** a disk laser crystal forming the laser-active medium (18) of the laser amplifier (3) is passed through per round trip of the laser pulses in the laser amplifier (3) more frequently than the further transmissive optical element (8).

11. A method according to any one of the preceding claims, **characterised in that** for microstructuring materials the ultrashort pulses are used as individual pulses or as pulse sequences.

## Revendications

1. Procédé de génération d'impulsions ultracourtes de forme sensiblement rectangulaire qui présentent une durée d'impulsion inférieure à 10 ps et dont le flanc montant et/ou descendant, avant l'atteinte de l'intensité sensiblement constante sur le plateau d'intensité, dure au maximum deux fois moins, en particulier au maximum quatre fois moins longtemps que la durée du plateau, avec un laser à impulsions ultracourtes (1) qui comprend un oscillateur à impulsions ultracourtes (2) à mode bloqué et, pour générer les impulsions ultracourtes, un amplificateur laser régénératif (3) placé en aval avec un milieu laser actif transmissif (18) et un autre élément optique transmissif (8),
dans lequel des impulsions laser ayant un spectre de longueurs d'onde large d'au moins 0,5 nm sont amplifiées dans le milieu laser actif (18) et présentent un glissement de fréquence (ou chirp) positif avant l'apparition d'effets non linéaires, et dans lequel l'action d'une dispersion linéaire et non linéaire du milieu laser actif (18) et de l'autre élément optique transmissif (8) est réglée de façon que l'énergie d'impulsion des impulsions laser amplifiées conduise à l'intérieur de l'amplificateur laser (3), en raison d'effets non linéaires, à un élargissement spectral des impulsions laser d'au moins le double et que la densité spectrale de puissance des impulsions laser amplifiées diminue au centre du spectre d'impulsion et varie en direction des bords du spectre d'impulsion, de sorte qu'elle se décale sensiblement sur deux pointes aux bords du spectre d'impulsion.

2. Procédé selon la revendication 1, **caractérisé en ce que** l'action amplificatrice du milieu laser actif (18) sur les impulsions laser dans l'amplificateur laser (3) atteint une saturation quand le nombre de leurs passages augmente et/ou quand la longueur de chemin augmente.

3. Procédé selon la revendication 1 ou 2, **caractérisé en ce que** l'action amplificatrice nette du milieu laser actif (18) dépend de la longueur d'onde et est plus élevée au centre du spectre d'impulsion que sur ses bords.

4. Procédé selon une des revendications précédentes, **caractérisé en ce que** les impulsions laser dans l'amplificateur laser (3) sont étendues par dispersion linéaire au moins au double de la durée d'impulsion limitée par transformée avant l'apparition d'effets non linéaires.

5. Procédé selon une des revendications précédentes, **caractérisé en ce que** la largeur à mi-hauteur de la répartition de densité spectrale de puissance des impulsions laser avant l'entrée dans l'amplificateur laser (3) est d'au moins 150 GHz.

6. Procédé selon une des revendications précédentes, **caractérisé en ce que** les impulsions de sortie de l'amplificateur laser (3) présentent une durée d'impulsion supérieure à 0,5 ps et une énergie d'impulsion d'au moins 10 µJ.

7. Procédé selon une des revendications précédentes, **caractérisé en ce que** la longueur d'onde centrale des impulsions de sortie de l'amplificateur laser (3) se situe entre 600 et 1300 nm.

8. Procédé selon une des revendications précédentes, **caractérisé en ce que** les impulsions de sortie de l'amplificateur laser (3) sont converties en fréquence par un élément de conversion en fréquence (19) non linéaire placé en aval de l'amplificateur laser (3).

9. Procédé selon une des revendications précédentes, **caractérisé en ce que** la longueur de l'autre élément optique transmissif (8) dans l'amplificateur laser (3) et l'amplification par passage d'une impulsion laser dans l'amplificateur laser (3) sont choisies de sorte que l'intégrale B par passage de l'impulsion laser soit inférieure à π, tandis que l'intégrale B accumulée sur la somme des passages d'impulsion est supérieure à π.

10. Procédé selon une des revendications précédentes, **caractérisé en ce qu'**un cristal de laser à disque formant le milieu laser actif (18) est traversé plus souvent que l'autre élément optique transmissif (8) par passage des impulsions laser dans l'amplificateur laser (3).

11. Procédé selon une des revendications précédentes, **caractérisé en ce que** les impulsions ultracourtes sont utilisées comme impulsions individuelles ou comme suites d'impulsions pour la microstructuration de matériaux.
